# EUROPÄISCHE PATENTSCHRIFT

(11) **EP 3 281 741 B1**
(45) Veröffentlichungstag und Bekanntmachung des Hinweises auf die Patenterteilung: **15.12.2021**
(21) Anmeldenummer: 17185214.8
(22) Anmeldetag: 08.08.2017
(51) Int. Cl.: B23B 49/00

(54) **VERFAHREN UND VORRICHTUNG ZUR BEARBEITUNG EINES WERKSTÜCKS AN EINER NUMERISCH GESTEUERTEN WERKZEUGMASCHINE**
METHOD AND DEVICE FOR MACHINING A WORKPIECE ON A NUMERICALLY CONTROLLED MACHINE TOOL
PROCÉDÉ ET DISPOSITIF DE TRAITEMENT D'UNE PIÈCE D'USINAGE SUR UNE MACHINE-OUTIL À COMMANDE NUMÉRIQUE

(30) Priorität: 08.08.2016 DE 102016214699
(43) Veröffentlichungstag der Anmeldung: 14.02.2018
(73) Patentinhaber: DMG MORI Ultrasonic Lasertec GmbH, 55758 Stipshausen (DE)
(72) Erfinder: Ketelaer, Jens, 65205 Wiesbaden (DE); Praetorius, Manuel, 55624 Rhaunen (DE)
(74) Vertreter: MERH-IP Matias Erny Reichl Hoffmann Patentanwälte PartG mbB

(56) Entgegenhaltungen:
- EP-A1- 2 591 870
- EP-A1- 2 803 455
- EP-A2- 0 341 942
- WO-A1-98/26739
- DE-A1-102007 013 055
- FR-A1- 2 944 722

## Beschreibung

Die vorliegende Erfindung betrifft ein Verfahren zur Bearbeitung eines Werkstücks mittels eines Werkzeugs an einer numerisch gesteuerten Werkzeugmaschine. Des Weiteren betrifft die vorliegende Erfindung eine Vorrichtung und eine Werkzeugmaschine, auf diesen das vorgenannte Verfahren ausgeführt werden kann. Ferner betrifft die vorliegende Erfindung ein Computerprogramm-Produkt, mit diesem das vorgenannte Verfahren ausgeführt werden kann.

### HINTERGRUND DER ERFINDUNG

Im Stand der Technik sind Werkzeugmaschinen bekannt, bei denen zum Beispiel bei einer spanenden Bearbeitung eines Werkstücks durch ein Werkzeug die Rotationsbewegung des Werkzeugs durch eine Ultraschallschwingung des Werkzeugs überlagert werden kann.

EP 1 763 416 B1 beschreibt in diesem Zusammenhang ein Werkzeug mit einem Werkzeughalter, der an einem ersten Ende eine Werkzeughalteraufnahme zum Adaptieren an eine drehbare Spindelnase, und an einem zweiten, dem ersten gegenüberliegenden Ende eine Werkzeugaufnahme aufweist, und mit einem in die Werkzeugaufnahme einsetzbaren Werkzeugkopf, wobei der Werkzeughalter einen Schwingungsmotor umfasst.

Bei einer solchen Werkzeugmaschine bilden ein Ultraschall-Erzeuger im Werkzeughalter, der die Ultraschallschwingung des Werkzeugs erzeugt, ein Schwingkörper und das im Werkzeughalter eingesetzte Werkzeug ein schwingungsfähiges System, das durch ein elektrisches Signal zu mechanischen Schwingungen angeregt wird, wobei man die größtmögliche mechanische Schwingungsamplitude erhält, wenn man das schwingungsfähige System mit seiner Resonanzfrequenz anregt.

Taucht das Werkzeug nun in das Werkstück ein, wird das schwingungsfähige System durch das Material des Werkstücks und der Reibung zwischen Werkstück und Werkzeug gedämpft und die Resonanzfrequenz verschiebt sich hin zu einer etwas geringeren Resonanzfrequenz. Dabei ist bekannt, dass sich mit steigender Dämpfung die Resonanzfrequenz weiter verschiebt.

Nun tritt dabei nicht selten das Problem auf, dass es während der Bearbeitung zu deutlichen Schwankungen der Resonanzfrequenz kommt. Gleichzeitig bedeutet dies aber, dass sich das Dämpfungsvermögen des Materials, das gerade bearbeitet wird, geändert hat.

Grund dafür können Materialänderungen innerhalb des Werkstücks sein, da trotz eines augenscheinlich homogenen Materials des Werkstücks eine Inhomogenität (wie z.B. Korngrenzen oder Einschlüsse von Fremdmaterial etc.) auftreten kann. Aufgrund solcher Materialänderungen kann es erforderlich sein, die vorgegebenen Bearbeitungsparameter, mit denen das Werkzeug das Werkstück bearbeitet, auf das jeweilige Material und seine Eigenschaften anzupassen.

Aber auch geometrische Änderungen des Werkstücks, wie zum Beispiel Bohrungen oder Ausnehmungen, stellen eine Art Inhomogenität des Materials des Werkstücks dar, die gegebenenfalls Einfluss auf die vorgegebenen Bearbeitungsparameter hat.

Um zu bestimmen, wann eine Materialänderung während der Bearbeitung des Werkstücks vorliegt, sind bereits Messsysteme bekannt, die das Prinzip des Körperschalls nutzen. Dabei wird, meist mit beträchtlichem Abstand zum Werkstück, ein entsprechender Körperschall-Sensor am Maschinenrahmen angebracht, der die aufkommenden Schwingungen misst und daraus ein Messsignal generiert. Eine Steuereinheit wertet diese Messsignale aus und kann bei einer entsprechenden Feststellung von Messsignalabweichungen während der Bearbeitung die vorgegebenen Bearbeitungsparameter ändern.

Doch ergibt sich daraus der Nachteil, dass aufgrund des weiter entfernt angeordneten Messsensors die aufkommenden Schwingungen nicht ausschließlich auf die Änderung des Materials innerhalb des Werkstücks zurückzuführen sind. Diese Schwingungen können durch Schwingungen aus der Umgebung beeinflusst bzw. überlagert werden. Dies kann zu Fehlauswertungen des Messsignals und im Ergebnis zu einer fehlerhaften Anpassung der Bearbeitungsparameter führen.

Aus diesem Grund ist es wichtig, eine Änderung des Materials während der Bearbeitung des Werkstücks so nah wie möglich am Werkstück selbst zu erfassen, um eine Überlagerung von äußeren Schwingungen weitestgehend zu vermeiden.

FR 2 944 722 A1 offenbart ein Verfahren zum Bohren eines Werkstücks umfassend die Schritte:
- Steuern einer Relativbewegung des Werkzeugs relativ zu dem Werkstück zum Bearbeiten des Werkstücks, - Erzeugen einer Schwingung des Werkzeugs mittels eines Schwingung-Erzeugers,
- Erfassen zumindest eines aus dem Schwingung-Erzeuger ausgegebenen Sensorsignals, und
- Erkennen einer Materialänderung am Werkstück während des Steuerns der Relativbewegung des Werkzeugs relativ zu dem Werkstück auf Basis des zumindest einen aus dem Schwingung-Erzeuger ausgegebenen Sensorsignals, wobei das Steuern der Relativbewegung des Werkzeugs relativ zu dem Werkstück auf Basis vorgegebener Bearbeitungsparameter durchgeführt wird, wobei das Verfahren weiterhin umfasst: - Anpassen der vorgegebenen Bearbeitungsparameter, wenn eine Materialänderung am Werkstück auf Basis des zumindest einen aus dem Ultraschall-Erzeuger ausgegebenen Sensorsignals erkannt wird, und - Steuern der Relativbewegung des Werkzeugs relativ zu dem Werkstück auf Basis der angepassten Bearbeitungsparameter, - wobei das Anpassen von Bearbeitungsparametern ferner zumindest ein Anpassen des Schwingung-Erzeugers umfasst.

EP 2 803 455 A1 offenbart eine Schneidvorrichtung mit einer Klinge und einer Auswerteeinheit zum Erkennen einer Materialänderung am Werkstück während des Steuerns der Relativbewegung der Klinge relativ zu dem Werkstück auf Basis eines aus einem Ultraschall-Erzeuger ausgegebenen Sensorsignals.

### ZUSAMMENFASSUNG DER ERFINDUNG

Eine Aufgabe der vorliegenden Erfindung ist es daher, ein Verfahren zur Bearbeitung eines Werkstücks an einer numerisch gesteuerten Werkzeugmaschine bereitzustellen, mit dem die obigen Probleme vermieden werden.

Des Weiteren ist es Aufgabe der vorliegenden Erfindung, eine Vorrichtung, eine Werkzeugmaschine und ein Computerprogramm-Produkt bereitzustellen, mit dem das erfindungsgemäße Verfahren ausgeführt werden kann.

Diese Aufgaben werden gelöst durch ein Verfahren nach Anspruch 1, eine Vorrichtung nach Anspruch 8, eine Werkzeugmaschine nach Anspruch 9 und ein Computerprogramm-Produkt nach Anspruch 10. Die abhängigen Ansprüche beziehen sich auf vorteilhafte Ausführungsbeispiele des erfindungsgemäßen Verfahrens.

Das erfindungsgemäße Verfahren zur Bearbeitung eines Werkstücks an einei numerisch gesteuerten Werkzeugmaschine mittels eines Werkzeugs umfasst die Schritte Steuern einer Relativbewegung des Werkzeugs relativ zu dem Werkstück zum Bearbeiten des Werkstücks, Erzeugen einer Ultraschall-Schwingung des Werkzeugs mittels eines Ultraschall-Erzeugers, Erfassen zumindest eines aus dem Ultraschall-Erzeuger ausgegebenen Sensorsignals, und Erkennen einer Materialänderung am Werkstück während des Steuerns der Relativbewegung des Werkzeugs relativ zu dem Werkstück auf Basis des zumindest einen aus dem Ultraschall-Erzeuger ausgegebenen Sensorsignals.

Der Ultraschall-Erzeuger dient neben der Anregung des Werkzeugs zur Schwingung auch gleichzeitig als Sensor für das Erfassen der Resonanzfrequenz des schwingungsfähigen Systems. Der Vorteil dieses Verfahrens liegt darin, dass der Ultraschall-Erzeuger in unmittelbarer Nähe zum Werkzeug und in direkter Linie mit Werkzeug und Werkstück angeordnet ist. Somit kann die Resonanzfrequenz und somit das Dämpfungsvermögen des jeweils vorliegenden Materials sehr nah am Werkstück erfasst werden, was wiederum den Einfluss von äußeren Schwingungsquellen im erheblichen Maße reduziert.

Zusätzlich kann eine Änderung des Materials im Werkstück punktgenau am Übergang von einem Material zum anderen Material erkannt werden und entsprechend diese Information an die Steuerung des Werkzeugs übertragen werden.

Das erfindungsgemäße Verfahren ist im Anspruch 1 definiert.

Die vorgegebenen Bearbeitungsparameter können in Abhängigkeit der Sensorsignale des Ultraschall-Erzeugers gesteuert werden, um entsprechend die jeweiligen Materialien mit den dafür erforderlichen Parametern zu bearbeiten.

Ein zusätzlicher Vorteil offenbart sich darin, dass sich durch die weitest gehende Reduzierung von Einflüssen der äußeren Schwingungsquellen für jedes Material eine Art "Fingerabdruck" (z.B. eine bestimmte gedämpfte Resonanzfrequenz des schwingungsfähigen Systems und/oder ein bestimmtes Dämpfungsvermögen des Materials) generieren und abspeichern lässt.

Dies kann zum Beispiel bei Verbundwerkstoffen von großem Vorteil sein, da hier oftmals sehr unterschiedliche Materialien (CFK mit Titan/Aluminium) in einem Werkstück miteinander kombiniert sind. Daraus ergibt sich der Wunsch bzw. der Bedarf, die Bearbeitungsparameter für jedes Material entsprechend anzupassen. Oftmals wurden im Vorfeld der Bearbeitung die jeweiligen Schichtdicken der Materialien auf Basis einer fehlerfreien Einspannung einprogrammiert, aufgrund dieser die Bearbeitungsparameter während der Bearbeitung dann angepasst wurden.

Da aber Schwankungen der Schichtdicken sowie Unregelmäßigkeiten in der Einspannung des Werkstücks zwangsweise vorhanden sind, wurde immer ein Teil eines der Materialien mit ungeeigneten Bearbeitungsparametern bearbeitet. Mithilfe des Verfahrens ist es nun möglich, punktgenau eine Materialänderung im Werkstück zu erkennen und daraufhin die Bearbeitungsparameter auf das jeweilige Material anzupassen.

Eine weitere vorteilhafte Weiterbildung des Verfahrens liegt darin, dass das Werkstück zumindest zwei unterschiedliche Materialbereiche umfasst, und wobei im Schritt Erkennen einer Materialänderung am Werkstück ein Übergang des Werkzeugs von einem Materialbereich in den anderen Materialbereich des Werkstücks erkannt wird.

Das oben beschriebene Verfahren ist dabei nicht auf eine begrenzte Anzahl an Materialänderungen limitiert, sondern kann unbegrenzt Materialänderungen erkennen, aufgrund dessen die Bearbeitungsparameter des Werkzeugs angepasst werden können.

Zusätzlich lässt sich das Verfahren so vorteilhaft weiterbilden, dass das Werkstück einen Verbundwerkstoff, insbesondere einen Kohlefaser verstärkten Verbundwerkstoff, und/oder einen Glas- und/oder Keramikwerkstoff umfasst.

Eine Beschränkung des Verfahrens auf bestimmte Werkstoffe existiert nicht. Vorteilhafterweise hinterlassen auch Verbundwerkstoffe, Glas und Keramik einen "Fingerabdruck" (charakteristische/s Resonanzfrequenzen und/oder Dämpfungsvermögen), der für das Anpassen der vorgegebenen Bearbeitungsparameter abgespeichert und verwendet werden kann.

Das Verfahren kann vorteilhaft so weitergebildet werden, dass die Materialbereiche Schichten unterschiedlicher Materialien oder Materialbeschaffenheiten sind, oder dass die Materialbereiche Materialeinschlüsse im Werkstück sind, oder dass die Materialbereiche Bohrungen und/oder Ausnehmungen im Werkstück sind.

Materialänderungen bzw. Materialbereiche können sich nicht nur durch verschiedene Materialeigenschaften unterscheiden, sie können auch durch geometrische Änderungen des Werkstücks gekennzeichnet sein.

Zum Beispiel kann es während der Bearbeitung dazu kommen, dass sich das Werkzeug vom Material des Werkstücks in eine Bohrung des Werkstücks (eventuell auch nur teilweise) hinein arbeitet. Auch dann kommt es zu einer Änderung der Resonanzfrequenz bzw. des Dämpfungsvermögens des Werkstücks an dieser Stelle und somit zu einer Art Materialänderung. Auch hier kann es dann wiederum erwünscht sein, die vorgegebenen Bearbeitungsparameter anzupassen.

Das Verfahren kann vorteilhafterweise so weitergebildet werden, dass im Schritt Erkennen einer Materialänderung am Werkstück ein Kontakt des Werkzeugs mit einer Oberfläche des Werkstücks erkannt wird (d.h. zum Beispiel eine Materialänderung von Luft zu Oberfläche des Werkstücks, im Gegensatz zu einer Materialänderung im Werkstück).

Dies hat einen besonders großen Vorteil, da ein sehr schnelles Anfahren an das Werkstück gewährleistet werden kann und dabei die Bearbeitungszeit verkürzt werden kann. Dies ist insbesondere bei sehr stark bruchgefährdeten Materialen wie Glas oder Keramik von Vorteil.

Das Anfahren von Werkstücke aus solchen Materialien mit dem Werkzeug erfolgt bis dato nur bis zu einem vorgegebenen Sicherheitsabstand in hohem Tempo, danach wird mit den vorgegebenen Bearbeitungsparametern, die vergleichsweise langsam sind, weitergearbeitet. Wird der Sicherheitsabstand zu großzügig gewählt, wird Bearbeitungszeit unnötig verschenkt.

Durch die Erkennung der Materialänderung (z.B. von Luft zur Oberfläche des Werkstücks) kann das Werkzeug bis zur tatsächlichen Grenze von Luft zu Werkstück mit hohem Tempo bewegt werden, bevor eine Anpassung der vorgegebenen Bearbeitungsparameter auf das entsprechende Material durchgeführt wird.

Im Schritt Erkennen einer Materialänderung am Werkstück wird ferner eine zeitliche Änderung und gleichzeitig eine Wertänderung eines oder mehrerer Parameter des Sensorsignals des Ultraschall-Erzeugers erfasst.

Der Vorteil dieses Schrittes liegt darin, dass eine Anderung der Resonanzfrequenz des schwingungsfähigen Systems auch andere Gründe haben kann als eine Materialänderung des Werkstoffs. Durch den Bearbeitungsprozess entstehen zum Teil große Mengen an Wärme, die das Werkzeug wie aber auch das Werkstück teils stark erhitzen.

Auch dieses Beeinflusst die Resonanzfrequenz des schwingungsfähigen Systems im erheblichen Maße. Allerdings besteht die Möglichkeit, diese Einflüsse von denen einer Materialänderung zu unterscheiden.

Eine Änderung der Resonanzfrequenz des schwingungsfähigen Systems aufgrund von Erwärmung des Werkzeugs und/oder Werkstücks erfolgt kontinuierlich und über einen vergleichsweise langen Zeitraum. Dies steht im Gegensatz zum Auftreten einer Materialänderung, die sich in einer sprunghaften Änderung der Resonanzfrequenz bemerkbar macht.

Neben der zeitlichen Anderung eines oder mehrerer Parameter des Sensorsignals wird auch die Wertänderung des/der entsprechenden Parameter des Sensorsignals erfasst. Jedes Sensorsignal kann ein Rauschen aufweisen, was sich unter anderem in zeitlich abrupten, aber sehr geringen Änderungen des Parameters bemerkbar macht.

Daher wird neben dem Erfassen der zeitlichen Anderung auch die Wertänderung der entsprechenden Parameter erfasst. Diese Kombination bildet die Grundlage für eine zuverlässige Aussage über das Vorhandensein einer Materialänderung.

Das Verfahren weist den folgenden Schritt auf: Feststellen, ob die zeitliche Änderung und die Wertänderung des mindestens einen Sensorsignals des Ultraschall-Erzeugers entsprechend eine vorbestimmte Änderungszeit unterschreitet und gleichzeitig einen vorbestimmten Änderungswert überschreitet.

Neben dem Erfassen der zeitlichen Änderung und der Wertänderung der Parameter des Sensorsignals ist es erforderlich, Grenzwerte für die jeweiligen Änderungen im Sensorsignal festzulegen.

Auf Basis derer kann ein Auftreten einer Materialänderung von anderen Faktoren (wie eben eine Temperaturänderung an Werkstück/Werkzeug) weitestgehend unterschieden werden, in dem ein Über- bzw. Unterschreiten der Grenzwerte festgestellt werden kann.

Die vorgegebenen Bearbeitungsparameter werden angepasst, wenn die zeitliche Änderung und die Wertänderung des mindestens einen Sensorsignals des Ultraschall-Erzeugers entsprechend die vorbestimmte Änderungszeit unterschreitet und gleichzeitig den vorbestimmten Änderungswert überschreitet.

Durch das zusätzliche Überprüfen der zeitlichen Änderung und der Wertänderung des mindestens einen Parameters des Sensorsignals kann eine zuverlässigere Aussage über das Vorhandensein einer Materialänderung getroffen werden. Das Risiko, eine vermeintlich vorhandene Materialänderung aufgrund von Temperaturveränderungen des Werkzeugs und Werkstücks zu erfassen, kann mittels dieser zusätzlichen Überprüfung deutlich minimiert werden.

Eine weitere vorteilhafte Weiterbildung dieses Verfahrens liegt darin, dass das Anpassen von Bearbeitungsparametern zumindest ein Anpassen einer Drehzahl bzw. Schnittgeschwindigkeit und/oder eines Vorschubs der Relativbewegung des Werkzeugs umfasst. Vorzugsweise sind die vorgegebenen Bearbeitungsparameter eines oder mehreres aus einer Vorschubgeschwindigkeit des Werkzeugs bei der Werkstückbearbeitung, einer Schnittgeschwindigkeit der spanenden Schneiden bzw. Abschnitte des Werkzeugs und der Drehzahl des Werkzeugs (z.B. eine Spindeldrehzahl einer das Werkzeug antreibenden Arbeitsspindel einer Werkzeugmaschine).

Somit können aufgrund einer detektierten Materialänderung bestimmte vorgegebene Bearbeitungsparameter angepasst werden, zum Beispiel die des Hauptantriebs (z.B. Spindelantrieb) für die Rotation des Werkzeugs und/oder des Antriebs für den Vorschub des Werkzeugs.

Weiterhin ist es eine vorteilhafte Weiterbildung des Verfahrens, wenn das Anpassen von Bearbeitungsparametern ferner zumindest ein Anpassen einer Frequenz und/oder einer Leistung des Ultraschall-Erzeugers umfasst.

Nicht nur die Antriebe für die Werkzeugrotation und den Vorschub des Werkzeugs können auf die entsprechende Materialänderung angepasst werden, auch der Ultraschall-Erzeuger selbst kann den Erfordernissen des Materials angepasst werden. Dies kann zum Beispiel die Frequenz, die Amplitude und die Leistung des Ultraschall-Erzeugers umfassen.

Das Verfahren kann vorteilhafterweise so weitergebildet werden, dass der Ultraschall-Erzeuger ein Piezo-Aktor-System ist.

Der Vorteil eines Piezo-Aktor-Systems liegt darin, dass extrem hohe Frequenzen (Ultraschall) durch das sehr hohe dynamische Verhalten der Piezokristalle erzeugt werden können, wobei gleichzeitig die Piezo-Elemente eine hohe Robustheit und gutes lineares Steuerungsverhalten aufweisen.

Das Verfahren kann vorteilhafterweise so weitergebildet werden, dass das Werkzeug zumindest eine geometrisch bestimmte Schneide oder zumindest eine geometrisch unbestimmte Schneide aufweist.

Das Verfahren ist weder auf bestimmte Materialien/Werkstoffe noch auf bestimmte Werkzeuge beschränkt und kann daher in einem sehr breiten Anwendungsspektrum Verwendung finden.

Die erfindungsgemäße Vorrichtung ist im Anspruch 8 definiert.

Die erfindungsgemäße Werkzeugmaschine zur Bearbeitung eines Werkstücks mittels eines Werkzeugs umfasst dabei folgendes: eine Steuereinheit zum Steuern einer Relativbewegung des Werkzeugs relativ zu dem Werkstück zum Bearbeiten des Werkstücks, einen Ultraschall-Erzeuger zum Erzeugen einer Ultraschall-Schwingung des Werkzeugs, und eine Erfassungseinheit zum Erfassen zumindest eines aus dem Ultraschall-Erzeuger ausgegebenen Sensorsignals.

Somit ist es möglich, das vorher beschriebene Verfahren in einer Steuervorrichtung bzw. einer Werkzeugmaschine zu implementieren und damit bereits existierenden Werkzeugmaschinen die Nutzung des Verfahrens zu ermöglichen. Dies kann mit vorbeschriebenen bevorzugten Aspekten des Verfahrens kombiniert werden.

Das erfindungsgemäße Computerprogramm-Produkt weist dabei folgendes auf: ein auf einem computerlesbaren Datenspeichermedium gespeichertes Computerprogramm, das ausführbar an einer numerischen Steuereinheit einer numerisch gesteuerten Werkzeugmaschine oder in einem mit einer Steuereinheit einer numerisch gesteuerten Werkzeugmaschine verbundenen Computer ist und dafür eingerichtet ist, das weiter oben beschriebene Verfahren auszuführen.

Dadurch kann das Verfahren in eine bestehende Steuerungssoftware einer Werkzeugmaschine implementiert und ausgeführt werden. Dies kann mit vorbeschriebenen bevorzugten Aspekten des Verfahrens kombiniert werden.

Im folgenden werden weitere, zur Anwendung des erfindungsgemäßen Verfahrens bzw. von beispielhaften Ausführungen desselben vorteilhaft nutzbare Aspekte beschrieben.

Eine Vorrichtung zur Erzeugung einer Ultraschallschwingung eines Werkzeugs zur spanenden Ultraschall-Bearbeitung eines Werkstücks und zur Messung von Ultraschall-Schwingungsparametern der Ultraschallschwingung des Werkzeugs, insbesondere bevorzugt zum Erkennen einer Materialänderung im bzw. am Werkstück während der Bearbeitung, kann aufweisen: einen Werkzeughalter zur Aufnahme des Werkzeugs, einen Ultraschallwandler (Ultraschall-Erzeuger) im Werkzeughalter zum Erzeugen der Ultraschallschwingung des Werkzeugs, eine Sensoreinrichtung im Werkzeughalter zum Erzeugen eines Sensorsignals basierend auf der Ultraschallschwingung des Werkzeugs, und eine Sensorsignal-Auswertevorrichtung zum Auswerten des Sensorsignals. Die Auswertevorrichtung kann dazu eingerichtet sein, auf Basis einer Auswertung des Sensorsignals eine Materialänderung im Werkstück während der Bearbeitung gemäß einem der vorstehenden Aspekte auszuführen.

Beispielsweise kann der Ultraschallwandler (Ultraschall-Erzeuger) als ein oder mehrere Piezo-Elemente ausgebildet sein, die auch als Sensoreinrichtung fungieren.

Somit wird eine Vorrichtung bereitgestellt, mit der eine Ultraschallschwingung des Werkzeugs erzeugt und parallel dazu eine direkte Messung der Ultraschall-Schwingungsparameter des schwingenden Werkzeugs durchgeführt werden kann, insbesondere bevorzugt zum Erkennen einer Materialänderung im bzw. am Werkstück während der Bearbeitung. Es kann ein elektrisches Sensorsignal erzeugt werden, das einen direkten Rückschluss auf die mechanische Schwingung erlaubt. Das Sensorsignal kann zu einem oder mehreren Zeitpunkten oder in einem Zeitraum während der Bearbeitung erzeugt werden und ist somit ständig aktualisierbar. Dies ermöglicht eine Überwachung der Schwingung bzw. die Detektion von Veränderungen der Schwingungsparameter wie beispielsweise einer Verminderung der Schwingungsamplitude oder einer Änderung der Resonanzfrequenz, insbesondere bevorzugt zum Erkennen einer Materialänderung im bzw. am Werkstück während der Bearbeitung.

Vorzugsweise umfasst die Sensoreinrichtung ein oder mehrere piezoelektrische Sensorelemente und das Sensorsignal ist bevorzugt eine durch die Ultraschallschwingung des Werkzeugs bewirkte elektrische Spannung.

Vorzugsweise ist der Werkzeughalter rotierbar und weist die Vorrichtung ein mit der Sensoreinrichtung verbundenes Senderelement im Werkzeughalter und ein von dem Senderelement beabstandetes Empfängerelement zur berührungslosen Übertragung des Sensorsignals von dem Senderelement zu dem Empfängerelement auf.

Dabei kann das Empfängerelement beispielsweise außerhalb des Werkzeughalters in einem ortsfesten Teil einer Werkzeugmaschine mit der erfindungsgemäßen Vorrichtung angeordnet sein. Mit Hilfe des vom Senderelement beabstandeten maschinenseitigen Empfängerelements kann das Sensorsignal aus dem rotierbaren Werkzeughalter zur Auswertung herausgeführt werden.

Vorzugsweise weist die Sensoreinrichtung ein Isolierungselement zur elektrischen Isolation von dem Ultraschallwandler auf und weist die Vorrichtung eine Energieübertragungsvorrichtung zum Übertragen von Energie in den Werkzeughalter zur Energieversorgung des Ultraschallwandlers auf, wobei die Energieübertragungsvorrichtung von dem Senderelement und von dem Empfängerelement elektrisch isoliert ist.

Durch die elektrische Entkopplung der Sensoreinrichtung und der Sensorsignalbahn im Werkzeughalter vom Ultraschallschwingungsantrieb und dessen Energieversorgung erfolgt die Detektion der Werkzeugschwingung vollkommen unabhängig von der Erzeugung der Werkzeugschwingung, wodurch eine Verfälschung des Sensorsignals verhindert wird.

Vorzugsweise sind das Senderelement und das Empfängerelement dazu eingerichtet, das Sensorsignal induktiv vom Senderelement zum Empfängerelement zu übertragen.

Diese Form der berührungslosen Übertragung hat den Vorteil, dass keine zusätzliche Schaltung oder Energieversorgung im Werkzeughalter oder ein Netzteil nötig ist, um das Sensorsignal aus dem Werkzeughalter herauszuführen, da die induktive Übertragung keine weitere Energie benötigt.

Vorzugsweise bildet das Senderelement mit dem Empfängerelement einen ersten Transformator, wobei das Senderelement einen ersten Ferritkern und eine Primärwicklung des ersten Transformators aufweist und das Empfängerelement einen zweiten Ferritkern und eine Sekundärwicklung des ersten Transformators aufweist, und die Energieübertragungsvorrichtung als ein zweiter Transformator mit einer Primärwicklung des zweiten Transformators und einer Sekundärwicklung des zweiten Transformators ausgebildet ist, wobei der erste Transformator und der zweite Transformator so angeordnet sind, dass die Übertragung des Sensorsignals von der Primärwicklung des ersten Transformators zu der Sekundärwicklung des ersten Transformators in einer im Wesentlichen senkrechten Richtung zu einer Übertragungsrichtung der Energie zur Energieversorgung des Ultraschallwandlers von der Primärwicklung des zweiten Transformators zu der Sekundärwicklung des zweiten Transformators erfolgt.

Dies hat den Vorteil, dass die jeweiligen Magnetfelder der beiden Transformatoren senkrecht zueinander orientiert sind, so dass sich Energieversorgung und Signalübertragung nur gering gegenseitig beeinflussen.

Alternativ sind das Senderelement und das Empfängerelement dazu eingerichtet, das Sensorsignal optisch vom Senderelement zum Empfängerelement zu übertragen.

Eine erfindungsgemäße Werkzeugmaschine zur spanenden Bearbeitung eines Werkstücks umfasst die erfindungsgemäße Vorrichtung und ein Gehäuse, in dem sowohl ein ortsfester Teil der Energieübertragungseinrichtung, der die Primärwicklung des zweiten Transformators und einen ersten Schalenkern des zweiten Transformators aufweist, als auch das Empfängerelement angeordnet sind.

Somit kann das Sensorsignal in den ortsfesten Teil der Werkzeugmaschine geleitet werden und dort ausgewertet werden.

Ein Verfahren zum Messen von Ultraschall-Schwingungsparametern eines Werkzeugs zur spanenden Ultraschall-Bearbeitung eines Werkstücks, insbesondere bevorzugt zum Erkennen einer Materialänderung im bzw. am Werkstück während der Bearbeitung, hat bevorzugt die Schritte: Versetzen des in einem Werkzeughalter aufgenommenen Werkzeugs in eine Ultraschallschwingung; Erzeugen eines Sensorsignals basierend auf der Ultraschallschwingung des Werkzeugs mittels einer Sensoreinrichtung im Werkzeughalter; Weiterleiten des Sensorsignals von der Sensoreinrichtung zu einem mit der Sensoreinrichtung verbundenen Senderelement im Werkzeughalter; Übertragen des Sensorsignals von dem Senderelement zu einem von dem Senderelement beabstandeten Empfängerelement; Weiterleiten des Sensorsignals von dem Empfängerelement zu einer Sensorsignal-Auswertevorrichtung; Auswerten des Sensorsignals in der Sensorsignal-Auswertevorrichtung zur Bestimmung der Ultraschall-Schwingungsparameter des Werkzeugs, insbesondere bevorzugt zum Erkennen einer Materialänderung im bzw. am Werkstück während der Bearbeitung.

Somit wird ein elektrisches Sensorsignal erzeugt, dass einen direkten Rückschluss auf die mechanische Schwingung erlaubt, insbesondere bevorzugt zum Erkennen einer Materialänderung im bzw. am Werkstück während der Bearbeitung. Das Sensorsignal kann zu einem oder mehreren Zeitpunkten oder in einem Zeitraum während der Bearbeitung erzeugt werden. Somit können die Ultraschall-Schwingungsparameter ständig aktualisiert und Veränderungen der Schwingung kontinuierlich detektiert werden insbesondere bevorzugt zum Erkennen einer Materialänderung im bzw. am Werkstück während der Bearbeitung.

Vorzugsweise wird beim Auswerten den Sensorsignals eine Frequenz der Ultraschallschwingung des Werkzeugs aus einer Frequenz des Sensorsignals und/oder eine Amplitude der Ultraschallschwingung des Werkzeugs aus einer Amplitude des Sensorsignals bestimmt.

Somit können Resonanzfrequenzänderungen des schwingungsfähigen Systems bzw. eine Verringerung der Amplitude in einfacher Weise aus dem Sensorsignal bestimmt werden, insbesondere bevorzugt zum Erkennen einer Materialänderung im bzw. am Werkstück während der Bearbeitung. Auf Basis des Vergleichs der eingestrahlten Frequenz und der aktuellen Resonanzfrequenz lässt sich damit das Schwingungssystem in Resonanz regeln, falls dies für den Bearbeitungsprozess vorteilhaft ist.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt einen Werkzeughalter in Schnittansicht, der in dem erfindungsgemäßen Verfahren in Ausführungsbeispielen eingesetzt werden kann;
- Fig. 2A: zeigt schematisch die erfindungsgemäße Bearbeitung eines mehrschichtigen Werkstücks mit entsprechenden Sensorsignalen des Ultraschall-Erzeugers, wobei das Werkzeug das Werkstück im Bereich des Materials A bearbeitet;
- Fig. 2B: zeigt schematisch die erfindungsgemäße Bearbeitung des mehrschichtigen Werkstücks mit dazugehörigen Sensorsignalen des Ultraschall-Erzeugers, wobei das Werkzeug das Werkstück nun im Bereich des Materials B bearbeitet;
- Fig. 3: zeigt ein Ablaufdiagramm eines Ausführungsbeispiels des erfindungsgemäßen Verfahrens; und
- Fig. 4: zeigt schematisch ein Ausführungsbeispiel einer erfindungsgemäßen Werkzeugmaschine.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

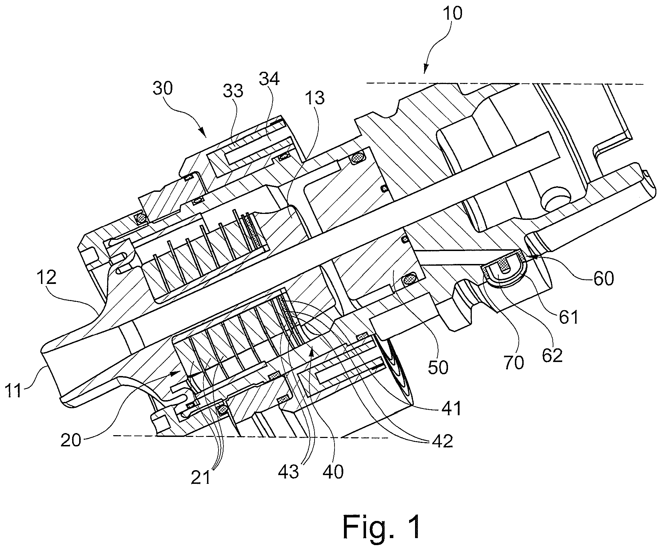

Fig. 1 zeigt einen beispielhaften Aufbau eines Werkzeughalters 10, der in dem erfindungsgemäßen Verfahren eingesetzt werden kann.

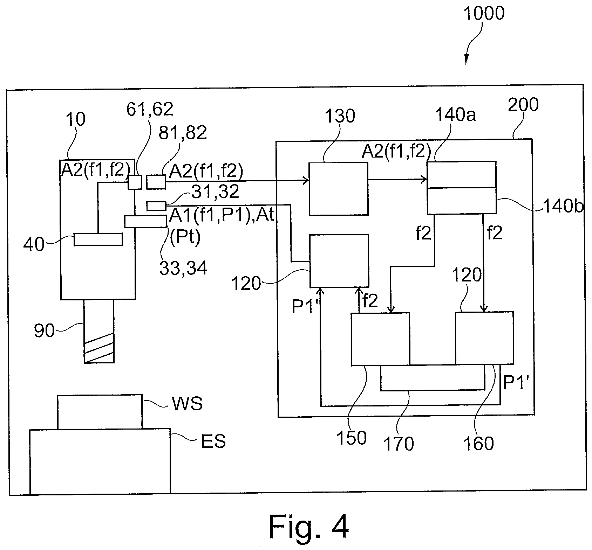

An einem Ende des Werkzeughalters 10 befindet sich ein Werkzeugaufnahmeabschnitt 11 zur Aufnahme eines Werkzeugs 90 (in Fig. 1 nicht gezeigt, siehe Fig. 4). Im Werkzeughalter 10 sind beispielhaft mehrere, z. B. sechs lochscheibenförmige erste Piezo-Elemente 21 beispielhaft gestapelt angeordnet, die beispielhaft über einen Übertragungsabschnitt 12 mit dem Werkzeugaufnahmeabschnitt 11 verbunden sind und beispielhaft einen Ultraschallwandler 20 (Ultraschall-Erzeuger) zur Umwandlung einer elektrischen Spannung in eine mechanische Schwingung (z.B. mit einer Frequenz im Ultraschallbereich) bilden.

Über den Übertragungsabschnitt 12 wird beispielhaft die mechanische Schwingung der ersten Piezo-Elemente 21 auf das Werkzeug 90 übertragen. Die ersten Piezo-Elemente 21 können beispielsweise als Piezokeramikscheiben mit dazwischen angebrachten Elektroden ausgebildet sein.

Die Energieversorgung des Ultraschallwandlers 20 erfolgt beispielhaft über einen Transformator (erster Transformator), der beispielhaft maschinenseitig aus einem ersten Schalenkern 31 und einer Primärwicklung 32 besteht (in Fig. 1 nicht gezeigt, siehe Fig. 4) und beispielhaft werkzeugseitig aus einem zweiten Schalenkern 33 und einer Sekundärspule 34 besteht, die beispielhaft als Ringelemente an der Außenseite des Werkzeughalters 10 angeordnet sind.

Auf einer dem Werkzeugaufnahmeabschnitt 11 abgewandten Seite des Stapels aus ersten Piezo-Elementen 21 ist beispielhaft ein lochscheibenförmiges piezoelektrisches Sensorelement 40 angeordnet, das beispielhaft aus einem PiezoElement 41 und zwei Kontakten 42 besteht und das beispielhaft mechanisch mit den ersten Piezo-Elementen 21 gekoppelt ist, aber durch ein Isolierungselement 43, das aus einer Keramik-Lochscheibe bestehen kann, elektrisch von den ersten Piezo-Elementen 21 isoliert ist. Durch ein weiteres Isolierungselement 43 ist das piezoelektrische Sensorelement 40 beispielhaft von einem Befestigungselement 13, z.B. einer Befestigungsmutter, elektrisch isoliert.

Das Befestigungselement 13 dient der Befestigung des piezoelektrischen Sensorelements 40 am Ultraschallwandler 20 sowie der Vorspannung der ersten Piezo-Elemente 21 wegen der dynamischen Belastung.

Die ersten Piezo-Elemente 21 und das piezoelektrische Sensorelement 40 sind gleich orientiert, wodurch zum Einen die Erzeugung und die Detektion der Schwingung in der gleichen Richtung ermöglicht wird und zum Anderen eine platzsparende Anordnung der Elemente im Werkzeughalter 10 erreicht wird.

Das piezoelektrische Sensorelement 40 wandelt die mechanischen Schwingungen des schwingungsfähigen Systems, das aus dem Werkzeug 90, dem Übertragungsabschnitt 12, dem Ultraschallwandler 20 und dem piezoelektrischen Sensorelement 40 besteht, in ein Sensorsignal um, das beispielhaft als elektrische Spannung über eine Drahtverbindung 50 von dem piezoelektrischen Sensorelement 40 durch den Werkzeughalter 10 zu einem Senderelement 61 und 62 an der Außenseite des Werkzeughalters 10 übertragen wird.

Von dem Senderelement 61 und 62 wird das Sensorsignal beispielhaft berührungslos zu einem maschinenseitigen Empfängerelement 81 und 82 (in Fig. 1 nicht gezeigt, siehe Fig. 4) übertragen.

Das Senderelement 61 und 62 ist Teil eines weiteren Transformators (zweiter Transformator) und besteht beispielhaft aus einem ersten Ferritkern 61 und einer Primärwicklung 62; das Empfängerelement 81 und 82 ist ebenfalls Teil des zweiten Transformators und besteht aus einem zweiten Ferritkern 81 und einer Sekundärwicklung 82.

Somit kann das Sensorsignal induktiv vom Werkzeughalter 10 zu einer maschinenseitigen Sensorsignal-Auswertevorrichtung übertragen werden.

Alternativ ist auch eine optische Übertragung möglich, wobei das Senderelement 61 und 62 als LED und das Empfängerelement 81 und 82 als Fotodiode ausgebildet ist. Das Senderelement 61 und 62 kann so dimensioniert und positioniert sein, dass es in eine Bohrung 70 für einen Datenchip für Werkzeugdaten nach Norm DIN 69893 passt. Der Werkzeughalter 10 kann gegenüber einem ortsfesten Teil der Werkzeugmaschine 1000 (in Fig. 1 nicht gezeigt, siehe Fig. 4) rotierbar sein.

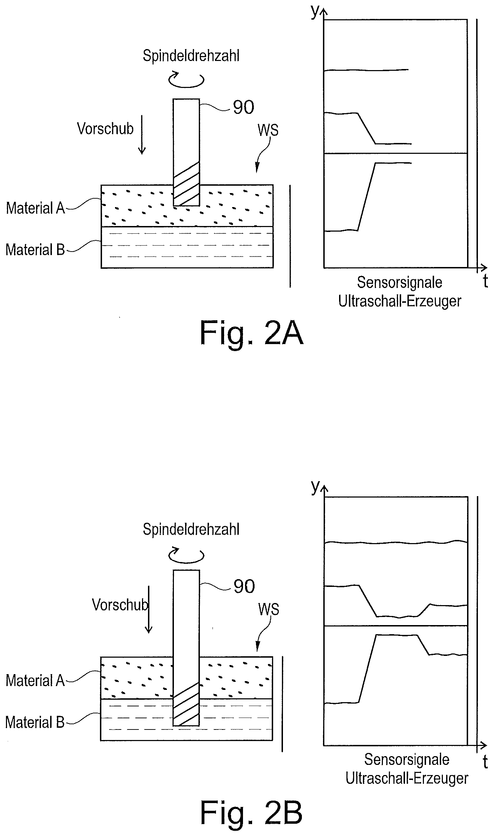

Fig. 2A zeigt schematisch einen Bearbeitungsvorgang eines spanabhebenden Werkzeugs 90 zur Ultraschallbearbeitung an einem Werkstück WS, das aus mehreren Schichten unterschiedlicher Materialien (Material A und Material B) besteht.

In dem Diagramm daneben sind die entsprechenden Sensorsignale (Amplitude, Frequenz, Leistung) der Piezo-Elemente 21 dargestellt, wobei bereits in dem Diagramm der Unterschied zwischen dem frei schwingungsfähigen System (also ohne Dämpfung) und dem gedämpft schwingungsfähigen System durch Eintauchen in das Material A dargestellt.

Dabei muss beim Eintauchen in das Material A dem schwingungsfähigen System mehr Leistung zugeführt werden, um eine Konstante Amplitude zu erzeugen, gleichzeitig ändert sich aber die Resonanzfrequenz des schwingungsfähigen Systems hin zu einer niedrigeren Frequenz, da es durch das Material A gedämpft wird.

Fig. 2B zeigt schematisch den Bearbeitungsvorgang, nachdem das spanabhebende Werkzeug 90 zur Ultraschallbearbeitung in das zweite Material B eingetaucht ist. Dabei verändern sich die Sensorsignale der Piezo-Elemente 21 wie in dem Diagramm daneben dargestellt.

Auf Grundlage der veränderten Sensorsignale kann einerseits die Materialänderung im Werkstück erkannt werden und bevorzugt können die jeweiligen Bearbeitungsparameter wie z.B. Drehzahl, Schnittgeschwindigkeit und/oder Vorschub des Werkzeugs, aber auch die Schwingungsparameter wie z.B. Parameter der Antriebssignale an die Piezo-Elemente 21 auf Basis der erfassten Sensorsignale bzw. auf Basis des Erkennens der Materialänderung angepasst werden.

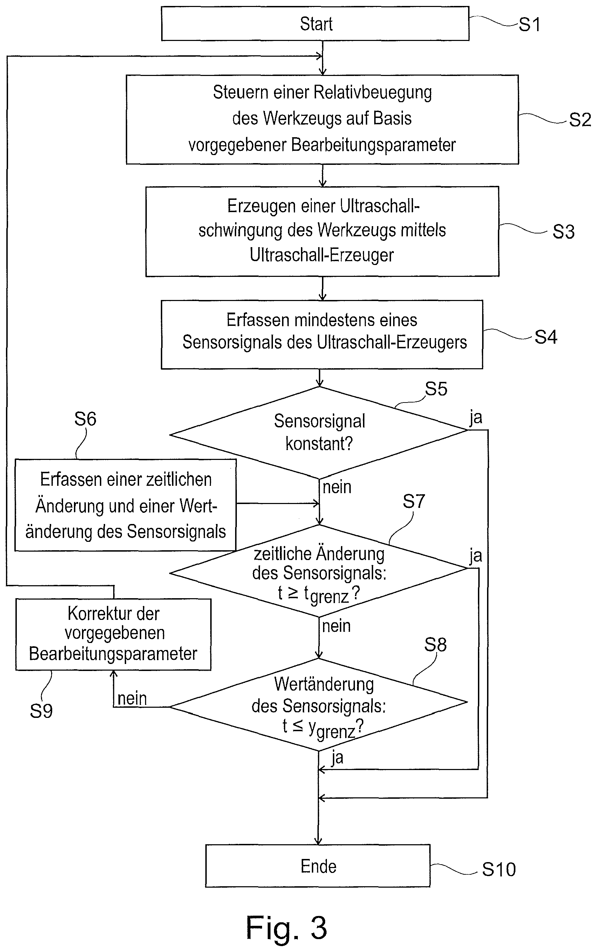

Fig. 3 zeigt ein Ablaufdiagramm eines Ausführungsbeispiels des erfindungsgemäßen Verfahrens. Dabei wird zu Beginn im Schritt S2 das Werkzeug 90 auf der Basis von vorgegebenen Bearbeitungsparametern betrieben. Im nächsten Schritt (S3) erfolgt das Erzeugen der Ultraschall-Schwingung des Werkzeugs 90 durch die Piezo-Elemente 21, wobei gleichzeitig die Signale der piezoelektrischen Sensorelemente 40 wie zum Beispiel Amplitude, Frequenz und Leistung erfasst werden (Schritt S4).

Im nächsten Schritt S5 erfolgt nun eine erste Auswertung der erfassten Sensorsignale. Es wird dabei z. B. kontrolliert, ob die erfassten Signale im Wesentlichen (im Bereich eines Rauschens des Signals) konstant sind. Ist dem nicht so, erfolgt im Schritt S6 die Erfassung einer zeitlichen Änderung t des jeweiligen Sensorsignals, also wie schnell sich dieses Signal ändert, und gleichzeitig die Erfassung der Wertänderung y des jeweiligen Sensorsignals, also wie sehr bzw. in welchem Umfang sich das entsprechende Signal ändert.

Diese erfassten Werte werden nun in den folgenden beiden Schritten S7 und S8 mit vorher festgelegten Grenzwerten t_{grenz} und y_{grenz} verglichen um anhand dieses Vergleichs feststellen zu können, ob eine Materialänderung vorliegt oder nicht.

Im Schritt S7 wird dafür zunächst die zeitliche Änderung t mit dem vorher festgelegten Grenzwert t_{grenz} verglichen.

Liegt die erfasste zeitliche Änderung t unterhalb des festgelegten Grenzwertes tgrenz, so wird im nächsten Schritt S8 verglichen, wie sehr sich der Wert y verändert hat. Dafür wird die erfasste Wertänderung y mit dem vorher festgelegten Grenzwert y_{grenz} verglichen. Liegt die erfasste Wertänderung y über dem festgelegten Grenzwert y_{grenz}, so sprechen die erfassten Sensorsignale für eine Materialänderung im Werkstück WS.

Die vorstehende Beschreibung kann sich z.B. darauf beziehen, dass die erfassten Werte eine Frequenz der am Werkzeughalter erzeugten Schwingung und/oder eine erfasste Leistung des Ultraschallwandlers 20 umfassen.

Auf Basis dessen werden im Schritt S9 die vorgegebenen Bearbeitungsparameter angepasst. Dies kann ein Anpassen bzw. Verändern der Vorschubgeschwindigkeit des Werkzeugs und/oder ein Anpassen bzw. Verändern der Schnittgeschwindigkeit bzw. Rotationsgeschwindigkeit des Werkzeugs während der Bearbeitung des Werkstücks umfassen.

Dabei kann die Anpassung der Parameter wie folgt erfolgen: Nach dem Erfassen der Sensorsignale der piezoelektrischen Sensorelemente 40 werden diese beispielhaft mit Datensätzen verglichen, die bereits erfasste Sensorsignale von entsprechend bekannten Materialien umfassen.

Diese Datensätze können Resonanzfrequenzen z.B. einer Werkzeug-Werkstoff-Kombination oder ein Dämpfungsvermögen eines Materials umfassen und sind für jedes bekannte Material charakteristisch (wie eine Art "Fingerabdruck"). Wird dabei eine Übereinstimmung festgestellt, so ist das vorliegende Material identifiziert und die Bearbeitungsparameter können auf Grundlage dessen an das entsprechende Material angepasst werden.

Liegt hingegen ein unbekanntes Material vor, so kann auf der Grundlage der erfassten Sensorsignale abgeschätzt werden, um welche Art von Werkstoff es sich handelt bzw. welchen Härtegrad und Dämpfungsvermögen dieser Werkstoff aufweist und anhand dessen die Bearbeitungsparameter angepasst werden. Somit sind beispielhaft auch Materialbestimmungen möglich.

Bei Werkstücken mit bekannter Materialzusammensetzung können auch bereits verschiedene Bearbeitungsparameter bzw. Bearbeitungsparametersätze für verschiedene Materialien bzw. Materialschichten des Werkstücks vorgegeben sein, und bei Erkennen der Änderung des Materials des Werkstücks an der Position der Werkzeugspitze des Werkzeugs werden die Bearbeitungsparameter der Bearbeitung entsprechend der vorgegebenen verschiedenen Bearbeitungsparameter bzw. Bearbeitungsparametersätze angepasst.

Wird indes im Schritt S8 festgestellt, dass die Wertänderung y des entsprechenden Sensorsignals nicht den festgelegten Grenzwert y_{grenz} überschritten hat, so wird das Verfahren mit unveränderten Bearbeitungsparametern fortgeführt.

Fig. 4 zeigt schematisch eine erfindungsgemäße Vorrichtung, mit der das erfindungsgemäße Verfahren ausgeführt werden kann.

Die Vorrichtung kann Teil einer Werkzeugmaschine 1000 sein. Gezeigt ist ein Werkzeughalter 10 mit einem piezoelektrischen Sensorelement 40, dessen Aufbau beispielhaft dem in Fig. 1 gezeigten Werkzeughalter 10 entspricht. Am Werkzeughalter 10 ist das Werkzeug 90 zur spanenden Ultraschallbearbeitung von Werkstücken aufgenommen.

Ein Generator 120 gibt ein Arbeitssignal A1 als Antriebssignal für den Piezo-Antrieb im Werkzeughalter 10 aus. Das Arbeitssignal A1 hat die Arbeitsfrequenz f1 und wird mit der Leistung P1 über die Energieübertragungsvorrichtung 30, die als Transformator bestehend aus Primärwicklung 32 samt erstem Schalenkern 31 und Sekundärwicklung 34 samt zweitem Schalenkern 33 ausgebildet ist, berührungslos in den rotierenden Werkzeughalter 10 übertragen. Außerdem gibt der Generator 120 ein Testsignal At einer Leistung Pt<P1 aus, das dem Arbeitssignal A1 überlagert wird und dessen Frequenz in einem Bereich um f1 variiert.

Aufgrund der Signale A1 und At wird das schwingfähige System im Werkzeughalter 10 zu einer Schwingung angeregt, deren Frequenzspektrum im Wesentlichen zwei Frequenzen aufweist.

Aufgrund der Schwingung des schwingungsfähigen Systems schwingt auch das piezoelektrische Sensorelement 40 in gleicher Weise und erzeugt so ein elektrisches Sensorsignal A2, das die Information über das Frequenzspektrum der Schwingung enthält.

Das Sensorsignal A2 wird beispielhaft über einen weiteren Transformator, der aus Primärwicklung 62 samt erstem Ferritkern 61 und Sekundärwicklung 82 samt zweitem Ferritkern 81 besteht, berührungslos von einer Ausleseeinrichtung 130 aus dem rotierenden Werkzeughalter 10 ausgelesen und zu einer Analyseeinrichtung 140a übertragen.

Die Analyseeinrichtung 140a ermittelt die im Frequenzspektrum von A2 enthaltenen Frequenzen, so dass in einer Einrichtung zum Ermitteln der Resonanzfrequenz 140b, die als ein Teil der Analyseeinrichtung 140a realisiert sein kann, die Frequenz des größten Peaks im Spektrum (Hauptfrequenz) der Arbeitsfrequenz f1 zugeordnet werden kann und die Frequenz des kleineren Peaks im Spektrum (Nebenfrequenz) der Resonanzfrequenz f2 zugeordnet werden kann. Die Ausleseeinrichtung 130, die Analyseeinrichtung 140a und die Einrichtung zum Ermitteln der Resonanzfrequenz 140b können auch zu zwei Einrichtungen kombiniert werden oder als eine einzige Einrichtung realisiert sein.

Der Wert der ermittelten Resonanzfrequenz f2 wird an eine erste Regelungseinrichtung 150 übermittelt, die den Generator 120 so regelt, dass die Frequenz f1 des Arbeitssignals A1 auf den Wert der Resonanzfrequenz f2 angepasst wird.

Alternativ oder zusätzlich kann der Wert der ermittelten Resonanzfrequenz f2 an eine zweite Regelungseinrichtung 160 übermittelt werden, die den Generator 120 so regelt, dass die Leistung P1, mit der das Arbeitssignal A1 in den Werkzeughalter 10 eingestrahlt wird, auf eine Leistung P1' erhöht wird, so dass auch bei einer Anregung mit f1≠f2 die mechanische Schwingungsamplitude erreicht wird, die als maximale Amplitude bei einer Anregung mit der Resonanzfrequenz f2 erreicht würde.

Auf diese Weise kann die mechanische Schwingungsamplitude der Werkzeugspitze auf einen bestimmten Wert stabilisiert werden, was sich positiv auf die Präzision bei der spanenden Bearbeitung mit dem Werkzeug 90 auswirkt. Wenn die Schwingungsamplitude auf den bei einer bestimmten Leistung maximal möglichen Wert stabilisiert wird, erhöht sich auch die Effizienz der Werkstückbearbeitung.

Über eine Benutzerschnittstelle 170 kann ein Benutzer der Vorrichtung die erste Regelungseinrichtung 150 und/oder die zweite Regelungseinrichtung 160 steuern, so dass das Arbeitssignal A1 nur auf Befehl des Benutzers oder beim Eintritt einer festgelegten Bedingung angepasst wird. Der Benutzer kann auch festlegen, dass das Arbeitssignal A1 automatisch in regelmäßigen oder unregelmäßigen Zeitabständen basierend auf der zuletzt ermittelten Resonanzfrequenz f2 angepasst wird.

Der Generator 120, die Ausleseeinrichtung (oder Detektionseinrichtung) 130, die Analyseeinrichtung 140a und die erste Regelungseinrichtung 150 können zu einer Vorrichtung 200 zum Ausgeben von Output-Signalen und Empfangen von Input-Signalen zusammengefasst werden, wobei ein erstes Output-Signal dieser Vorrichtung 200 dem Arbeitssignal ein zweites Output-Signal dem Testsignal At, und ein Input-Signal dem Sensorsignal A2 entspricht.

Im vorstehend genannten Beispiel kann die Schwingung des Werkzeugs an der jeweiligen Resonanzfrequenz des Schwingungssystems geregelt werden. Ändert sich die geregelte Resonanzfrequenz bzw. die damit verbundene Leistung, wenn sich das Werkzeug bzw. dessen Werkzeugspitze an einer Grenzfläche zweier Materialien befindet, kann dies gemäß Ausführungsbeispielen der Erfindung dazu genutzt werden, eine Materialänderung zu detektieren.

Dies kann einerseits das Erkennen einer Grenzfläche zwischen zwei Materialschichten im Werkstück sein, jedoch kann dies auch eine Grenzfläche zwischen dem Material des Werkstücks sein, z.B. bei Lufteinschlüssen, Hohlräumen, Bohrungen etc. im Werkstück oder auch an der Oberfläche des Werkstücks (Luft zu Werkstückoberfläche) z.B. zum Detektieren des Erstkontakts zum Werkstück.

Vorstehend wurden Beispiele bzw. Ausführungsbeispiele der vorliegenden Erfindung sowie deren Vorteile detailliert unter Bezugnahme auf die beigefügten Figuren beschrieben.

## Patentansprüche

1. Verfahren zur spanenden Bearbeitung eines Werkstücks (WS) an einer numerisch gesteuerten Werkzeugmaschine (1000) mittels eines Werkzeugs (90), umfassend:
- Steuern einer Relativbewegung des Werkzeugs (90) relativ zu dem Werkstück (WS) zum Bearbeiten des Werkstücks (WS),
- Erzeugen einer Ultraschall-Schwingung des Werkzeugs (90) mittels eines Ultraschall-Erzeugers (20),
- Erfassen zumindest eines aus dem Ultraschall-Erzeuger (20) ausgegebenen Sensorsignals (A2), und
- Erkennen einer Materialänderung am Werkstück (WS) während des Steuerns der Relativbewegung des Werkzeugs (90) relativ zu dem Werkstück (WS) auf Basis des zumindest einen aus dem Ultraschall-Erzeuger (20) ausgegebenen Sensorsignals (A2),
wobei das Steuern der Relativbewegung des Werkzeugs (90) relativ zu dem Werkstück (WS) auf Basis vorgegebener Bearbeitungsparameter durchgeführt wird,
wobei im Schritt Erkennen einer Materialänderung am Werkstück (WS) ferner eine zeitliche Änderung und gleichzeitig eine Wertänderung eines oder mehrerer Parameter des Sensorsignals (A2) des Ultraschall-Erzeugers (20) erfasst wird;
und wobei das Verfahren zudem umfasst:
- Feststellen, ob die zeitliche Änderung und die Wertänderung des mindestens einen Sensorsignals (A2) des Ultraschall-Erzeugers (20) entsprechend eine vorbestimmte Änderungszeit unterschreitet und gleichzeitig einen vorbestimmten Änderungswert überschreitet, und
die vorgegebenen Bearbeitungsparameter angepasst werden, wenn die zeitliche Änderung und die Wertänderung des mindestens einen Sensorsignals (A2) des Ultraschall-Erzeugers (20) entsprechend die vorbestimmte Änderungszeit unterschreitet und gleichzeitig den vorbestimmten Änderungswert überschreitet.

2. Verfahren gemäß Anspruch 1, **dadurch gekennzeichnet, dass**
das Werkstück (WS) zumindest zwei unterschiedliche Materialbereiche umfasst, und
wobei im Schritt Erkennen einer Materialänderung am Werkstück (WS) ein Übergang des Werkzeugs (90) von einem Materialbereich in den anderen Materialbereich des Werkstücks (WS) erkannt wird.

3. Verfahren gemäß Anspruch 2, **dadurch gekennzeichnet, dass**
das Werkstück (WS) einen Verbundwerkstoff, insbesondere einen Kohlefaser verstärkten Verbundwerkstoff, und/oder einen Glas- und/oder Keramikwerkstoff umfasst.

4. Verfahren gemäß Anspruch 2 oder 3, **dadurch gekennzeichnet, dass**
die Materialbereiche Schichten unterschiedlicher Materialien oder Materialbeschaffenheiten sind;
die Materialbereiche Materialeinschlüsse im Werkstück (WS) sind; und/oder
die Materialbereiche Bohrungen und/oder Ausnehmungen im Werkstück (WS) sind.

5. Verfahren gemäß einem der Ansprüche 1 bis 4, **dadurch gekennzeichnet, dass**
im Schritt Erkennen einer Materialänderung am Werkstück (WS) ein Kontakt des Werkzeugs (90) mit einer Oberfläche des Werkstücks (90) erkannt wird.

6. Verfahren gemäß einem der Ansprüche 1 bis 5, **dadurch gekennzeichnet, dass**
das Anpassen von Bearbeitungsparametern zumindest ein Anpassen einer Drehzahl und/oder eines Vorschubs der Relativbewegung des Werkzeugs (90) umfasst.

7. Verfahren gemäß einem der Ansprüche 1 bis 6, **dadurch gekennzeichnet, dass**
der Ultraschall-Erzeuger (20) ein Piezo-Aktor-System ist.

8. Vorrichtung zum Einsatz an einer Werkzeugmaschine (1000) zur spanenden
Bearbeitung eines Werkstücks (WS) mittels eines Werkzeugs (90), insbesondere gemäß einem der vorstehenden Ansprüche, wobei die Werkzeugmaschine (1000) eine Steuereinheit zum Steuern einer Relativbewegung des Werkzeugs (90) relativ zu dem Werkstück (WS) zum Bearbeiten des Werkstücks (WS), einen Ultraschall-Erzeuger (20) zum Erzeugen einer Ultraschall-Schwingung des Werkzeugs (90), und eine Erfassungseinheit zum Erfassen zumindest eines aus dem Ultraschall-Erzeuger (20) ausgegebenen Sensorsignals (A2) umfasst,
wobei die Vorrichtung eine Auswerteeinheit umfasst die dazu eingerichtet ist, eine Materialänderung am Werkstück (WS) während des Steuerns der Relativbewegung des Werkzeugs (90) relativ zu dem Werkstück (WS) auf Basis des zumindest einen aus dem Ultraschall-Erzeuger (20) ausgegebenen Sensorsignals (A2) zu erkennen, und
wobei die Auswerteeinheit beim Erkennen der Materialänderung am Werkstück (WS) ferner eine zeitliche Änderung und gleichzeitig eine Wertänderung eines oder mehrerer Parameter des Sensorsignals (A2) des Ultraschall-Erzeugers (20) erfasst; und
wobei die Vorrichtung zudem konfiguriert ist zum:
- Feststellen, ob die zeitliche Änderung und die Wertänderung des mindestens einen Sensorsignals (A2) des Ultraschall-Erzeugers (20) entsprechend eine vorbestimmte Änderungszeit unterschreitet und gleichzeitig einen vorbestimmten Änderungswert überschreitet, und
- Anpassen der vorgegebenen Bearbeitungsparameter, wenn die zeitliche Änderung und die Wertänderung des mindestens einen Sensorsignals (A2) des Ultraschall-Erzeugers (20) entsprechend die vorbestimmte Änderungszeit unterschreitet und gleichzeitig den vorbestimmten Änderungswert überschreitet.

9. Werkzeugmaschine (1000) zur Bearbeitung eines Werkstücks (WS) mittels eines Werkzeugs (90), umfassend:
- eine Steuereinheit zum Steuern einer Relativbewegung des Werkzeugs (90) relativ zu dem Werkstück (WS) zum Bearbeiten des Werkstücks (WS),
- einen Ultraschall-Erzeuger (20) zum Erzeugen einer Ultraschall-Schwingung des Werkzeugs (90), und
- eine Erfassungseinheit zum Erfassen zumindest eines aus dem Ultraschall-Erzeuger (20) ausgegebenen Sensorsignals (A2),
**gekennzeichnet durch**
eine Vorrichtung gemäß Anspruch 8.

10. Computerprogrammprodukt mit einem auf einem computerlesbaren Datenspeichermedium gespeicherten Computerprogramm, das ausführbar an einer numerischen Steuereinheit einer numerisch gesteuerten Werkzeugmaschine (1000) oder in einem mit einer Steuereinheit einer numerisch gesteuerten Werkzeugmaschine (1000) verbundenen Computer ist, und das dazu eingerichtet ist, an der Werkzeugmaschine (1000) das Verfahren gemäß einem der Ansprüche 1 bis 7 auszuführen.

## Claims

1. A method for machining a workpiece (WS) on a numerically controlled machine tool (1000) by means of a tool (90), comprising:
- controlling a relative movement of said tool (90) relative to said workpiece (WS) for machining said workpiece (WS),
- generating an ultrasonic vibration of said tool (90) by means of an ultrasonic generator (20),
- acquiring at least one sensor signal (A2) output from said ultrasonic generator (20), and
- identifying a material change on said workpiece (WS) while controlling said relative movement of said tool (90) relative to said workpiece (WS) based on said at least one sensor signal (A2) output by said ultrasonic generator (20),
wherein controlling said relative movement of said tool (90) relative to said workpiece (WS) is carried out based on specified machining parameters,
wherein, in said step of identifying a material change on said workpiece (WS), a temporal change and, at the same time, a change in value of one or more parameters of said sensor signal (A2) of said ultrasonic generator (20) is acquired; and
wherein the method further comprises:
- determining whether said temporal change and said change in value of said at least one sensor signal (A2) of said ultrasound generator (20) fall below a predetermined change time, respectively, and at the same time exceed a predetermined change value, respectively, and
said predetermined machining parameters are adapted when said temporal change and said change in value of said at least one sensor signal (A2) of said ultrasonic generator (20) fall below said predetermined change time, respectively, and at the same time exceed said predetermined change value, respectively.

2. The method according to claim 1, **characterized in that** said workpiece (WS) comprises at least two different material regions, and wherein, in said step of identifying a material change on said workpiece (WS), a transition of said tool (90) from one material region to said other material region of said workpiece (WS) is identified.

3. The method according to claim 2, **characterized in that**
said workpiece (WS) comprises a composite material, in particular a carbon fiber reinforced composite material, and/or a glass and/or ceramic material.

4. The method according to claim 2 or 3, **characterized in that**
said material regions are layers of different materials or of different material characteristics;
said material regions are material inclusions in said workpiece (WS); and/or
said material regions are bores and/or recesses in said workpiece (WS).

5. The method according to any one of claims 1 to 4, **characterized in that**,
in said step of identifying a material change on said workpiece (WS), contact of said tool (90) with a surface of said workpiece (90) is identified.

6. The method according to any one of claims 1 to 5, **characterized in that**
adapting machining parameters comprises at least adapting a rotational speed and/or a feed rate of said relative movement of said tool (90).

7. The method according to any one of claims 1 to 6, **characterized in that** said ultrasonic generator (20) is a piezo actuator system.

8. A device for use on a machine tool (1000) for machining a workpiece (WS) by means of a tool (90), in particular according to one of the preceding claims, wherein said machine tool (1000) comprises a control unit for controlling a relative movement of said tool (90) relative to said workpiece (WS) for machining said workpiece (WS), an ultrasonic generator (20) for generating an ultrasonic vibration of said tool (90), and an acquisition unit for acquiring at least one sensor signal (A2) output from said ultrasonic generator (20),
wherein said device comprises an evaluation unit configured to identify a material change on said workpiece (WS) while controlling said relative movement of said tool (90) relative to said workpiece (WS) based on said at least one sensor signal (A2) output from said ultrasonic generator (20), and
wherein said evaluation unit, when identifying said material change on said workpiece (WS), also acquires a temporal change and at the same time a change in value of one or more parameters of said sensor signal (A2) of said ultrasonic generator (20); and
wherein said device is further configured to:
― determine whether said temporal change and said change in value of said at least one sensor signal (A2) of said ultrasonic generator (20) fall below a predetermined change time, respectively, and at the same time exceed a predetermined change value, and
― adapt said specified machining parameters when said temporal change and said change in value of said at least one sensor signal (A2) of said ultrasonic generator (20) fall below said predetermined change time, respectively, and at the same time exceed said predetermined change value, respectively.

9. A machine tool (1000) for machining a workpiece (WS) by means of a tool (90), comprising:
― a control unit for controlling a relative movement of said tool (90) relative to said workpiece (WS) for machining said workpiece (WS),
― an ultrasonic generator (20) for generating an ultrasonic vibration of said tool (90), and
― an acquisition unit for acquiring at least one sensor signal (A2) output from said ultrasonic generator (20),
**characterized by**
a device according to claim 8.

10. A computer program product including a computer program stored on a computer-readable data storage medium, said computer program being executable on a numerical control unit of a numerically controlled machine tool (1000) or in a computer connected to a control unit of a numerically controlled machine tool (1000) and being configured to carry out the method according to one of claims 1 to 7 on said machine tool (1000).

## Revendications

1. Procédé pour l'usinage par enlèvement de copeaux d'une pièce (WS) sur une machine―outil (1000) à commande numérique au moyen d'un outil (90), comprenant :
― la commande d'un mouvement relatif de l'outil (90) par rapport à la pièce (WS) pour l'usinage de la pièce (WS),
― la génération d'une vibration ultrasonore de l'outil (90) au moyen d'un générateur d'ultrasons (20),
― la détection d'au moins un signal de capteur (A2) émis à partir du générateur d'ultrasons (20), et
― l'identification d'une modification de matériau sur la pièce (WS) pendant la commande du mouvement relatif de l'outil (90) par rapport à la pièce (WS) sur la base du au moins un signal de capteur (A2) émis à partir du générateur d'ultrasons (20),
dans lequel la commande du mouvement relatif de l'outil (90) par rapport à la pièce (WS) est mise en œuvre sur la base de paramètres d'usinage prédéfinis,
dans lequel à l'étape d'identification d'une modification de matériau sur la pièce (WS), une modification temporelle et simultanément une modification de valeur d'un ou de plusieurs paramètres du signal de capteur (A2) du générateur d'ultrasons (20) est en outre détectée ;
et dans lequel le procédé comprend en outre :
― le fait d'établir si la modification temporelle et la modification de valeur du au moins un signal de capteur (A2) du générateur d'ultrasons (20) passe de manière correspondante au―dessous d'une période de modification prédéfinie et simultanément dépasse une valeur de modification prédéfinie, et
les paramètres d'usinage prédéfinis sont adaptés lorsque la modification temporelle et la modification de valeur du au moins un signal de capteur (A2) du générateur d'ultrasons (20) passe de manière correspondante au―dessous de la période de modification prédéfinie et simultanément dépasse la valeur de modification prédéfinie.

2. Procédé selon la revendication 1, **caractérisé en ce que**
la pièce (WS) comprend au moins deux zones de matériau différentes, et
dans lequel à l'étape d'identification d'une modification de matériau sur la pièce (WS) une transition de l'outil (90) d'une zone de matériau dans l'autre zone de matériau de la pièce (WS) est identifiée.

3. Procédé selon la revendication 2, **caractérisé en ce que**
la pièce (WS) comprend un matériau composite, en particulier un matériau composite renforcé par des fibres de carbone, et/ou un matériau en verre et/ou en céramique.

4. Procédé selon la revendication 2 ou 3, **caractérisé en ce que**
les zones de matériau sont des couches de différents matériaux ou différentes natures de matériau ;
les zones de matériau sont des inclusions de matériau dans la pièce (WS) ;
et/ou
les zones de matériau sont des trous et/ou évidements dans la pièce (WS).

5. Procédé selon l'une quelconque des revendications 1 à 4, **caractérisé en ce que**
à l'étape d'identification d'une modification de matériau sur la pièce (WS) un contact de l'outil (90) avec une surface de la pièce (WS) est identifié.

6. Procédé selon l'une quelconque des revendications 1 à 5, **caractérisé en ce que**
l'adaptation de paramètres d'usinage comprend au moins une adaptation d'une vitesse de rotation et/ou d'une avance du mouvement relatif de l'outil (90).

7. Procédé selon l'une quelconque des revendications 1 à 6, **caractérisé en ce que**
le générateur d'ultrasons (20) est un système d'actionneur piézoélectrique.

8. Dispositif pour une insertion sur une machine-outil (1000) pour l'usinage par enlèvement de copeaux d'une pièce (WS) au moyen d'un outil (90), en particulier selon l'une quelconque des revendications précédentes, dans lequel la machine―outil (1000) comprend une unité de commande pour la commande d'un mouvement relatif de l'outil (90) par rapport à la pièce (WS) pour l'usinage de la pièce (WS), un générateur d'ultrasons (20) pour la génération d'une vibration ultrasonore de l'outil (90), et une unité de détection pour la détection d'au moins un signal de capteur (A2) émis à partir du générateur d'ultrasons (20),
dans lequel le dispositif comprend une unité d'évaluation qui est conçue pour identifier une modification de matériau sur la pièce (WS) pendant la commande du mouvement relatif de l'outil (90) par rapport à la pièce (WS) sur la base du au moins un signal de capteur (A2) émis à partir du générateur d'ultrasons (20), et
dans lequel l'unité d'évaluation lors de l'identification de la modification de matériau sur la pièce (WS) détecte en outre une modification temporelle et simultanément une modification de valeur d'un ou plusieurs paramètres du signal de capteur (A2) du générateur d'ultrasons (20) ; et
dans lequel le dispositif est configuré en outre pour :
― établir si la modification temporelle et la modification de valeur du au moins un signal de capteur (A2) du générateur d'ultrasons (20) passe de manière correspondante au―dessous d'une période de modification prédéfinie et simultanément dépasse une valeur de modification prédéfinie, et
― adapter les paramètres d'usinage prédéfinis lorsque la modification temporelle et la modification de valeur du au moins un signal de capteur (A2) du générateur d'ultrasons (20) passe de manière correspondante au― dessous de la période de modification prédéfinie et simultanément dépasse la valeur de modification prédéfinie.

9. Machine―outil (1000) pour l'usinage d'une pièce (WS) au moyen d'un outil (90), comprenant :
― une unité de commande pour la commande d'un mouvement relatif de l'outil (90) par rapport à la pièce (WS) pour l'usinage de la pièce (WS),
― un générateur d'ultrasons (20) pour la génération d'une vibration ultrasonore de l'outil (90), et
― une unité de détection pour la détection d'au moins un signal de capteur (A2) émis à partir du générateur d'ultrasons (20),
**caractérisée par**
un dispositif selon la revendication 8.

10. Produit―programme informatique avec un programme informatique mis en mémoire sur un support de mémoire de données lisible par ordinateur, qui peut être exécuté sur une unité de commande numérique d'une machine―outil (1000) à commande numérique ou dans un ordinateur relié à une unité de commande d'une machine―outil (1000) à commande numérique, et qui est conçu pour exécuter sur la machine―outil (1000) le procédé selon l'une quelconque des revendications 1 à 7.
